## Europäisches Patentamt

(19) **European Patent Office**

**Office européen des brevets**

(11) Veröffentlichungsnummer: **0 091 395**
**B1**

(12) **EUROPÄISCHE PATENTSCHRIFT**

(45) Veröffentlichungstag der Patentschrift:
04.12.85

(51) Int. Cl.⁴: **A 47 J  37/10, A 47 J  36/06**

(21) Anmeldenummer: **83710014.8**

(22) Anmeldetag: **30.03.83**

(54) **Scheibenartige Abdeckung für Bratpfannen od. dgl. Gefässe.**

(30) Priorität: **05.04.82  DE 3212646**
**06.05.82  DE 3216952**

(73) Patentinhaber: **Meurer Nonfood Product GmbH,**
**Libellenweg 10, D-7760 Radolfzell (DE)**

(43) Veröffentlichungstag der Anmeldung:
**12.10.83 Patentblatt 83/41**

(72) Erfinder: **Vossen, Franz, Bollstetterstrasse 29,**
**D-7760 Radolfzell (DE)**

(45) Bekanntmachung des Hinweises auf die Patenterteilung:
**04.12.85 Patentblatt 85/49**

(74) Vertreter: **Hiebsch, Gerhard F., Dipl.-Ing.,**
**Erzbergerstrasse 5A Postfach 464, D-7700 Singen 1 (DE)**

(84) Benannte Vertragsstaaten:
**AT BE CH FR GB IT LI NL SE**

(56) Entgegenhaltungen:
**EP - A - 0 039 754**
**DE - A - 2 915 274**
**DE - A - 2 925 660**
**DE - A - 3 029 157**
**US - A - 3 528 236**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine scheibenartige Abdeckung für Bratpfannen od. dgl. Gefäße, welche eine dampfdurchlässige Filterfläche aus einem faserigen Filterelement, insbesondere aus Filterpapier aufweist, die mit einem mit speichenartigen Radialarmen aus einer Werkstoffscheibe von Karton od. dgl. herausgeschnittenen Tragring verklebt ist (siehe EP-A-0 039 754).

Durch die US-A-3 528 236 ist ein Pfannendeckel aus einem rohrstumpfförmigen Rahmen mit speichenartiger Ausfachung bekanntgeworden, in welchen ein Filtertuch eingesetzt und mittels eines inneren Klemmrahmens verspannt werden kann. Die lösbare Verfestigung dieses Tuches am Tragrahmen in der Art eines zu befestigenden Zeugstücks an einem sogenannten Stickrahmen ermöglicht es, das Filtertuch auszutauschen, wenn es nach Gebrauch als Pfannendeckel mit aus einem Braten aufsteigenden Fettpartikeln durchsetzt ist.

Auch ist bereits vorgeschlagen worden, derartige Pfannenabdeckungen aus einer Scheibe von Filterpapier zu fertigen und dieses Filterpapier auf einen Kartonzuschnitt zu kaschieren.

Eine Abdeckung mit einem das Filterpapier umgebenden Tragring, der mit speichenartigen Radialarmen aus einer Werkstoffscheibe vom Karton od. dgl. herausgeschnitten ist und parallel zur Ebene des mit ihm und den Radialarmen unlösbar verbundenen Filterpapiers od. dgl. verläuft, ist durch die DE-A-29 15 274 bekanntgeworden und weist gegenüber anderen Pfannendeckeln ein Vorzug auf, zum einen ohne Behinderung des Dampfstromes Fettpartikel od. dgl. zurückzuhalten sowie zum anderen in Herstellung und Handhabung als Wegwerfartikel sehr einfach zu sein.

Insbesondere bei Bratgütern, welche verhältnismäßig flüssigkeitsreiche Bratdünste erzeugen, hat es sich gezeigt, daß sich in Abhängigkeit von der Filterpapierqualität dieses wellt und hierdurch ein Verziehen der gesamten Abdeckung möglich wird.

Angesichts dieser Gegebenheiten hat sich der Erfinder das Ziel gesetzt, eine Abdeckung der eingangs erwähnten Art so zu gestalten, daß sie auch bei hoher Feuchtigkeitserzeugung von großer Formstabilität ist und dennoch auf besonders einfache Weise hergstellt sowie als billiges Wegwerfprodukt nach einmaligem Gebrauch vernichtet werden kann.

Zur Lösung dieser Aufgabe führt eine scheibenartige Abdeckung der eingangs erwähnten Art bei der die Radialarme einer Breite durch wenigstens einen von einer ihrer Kanten ausgehenden Einschnitt querschnittsgeschwächt sind und die Klebverbindung zwischen Radialarm und Filterfläche zumindest im querschnittsgeschwächten Bereich vermindert ist. Diese Maßgaben entspannen den Pfannendeckel derart, daß ein Verziehen nicht mehr entstehen kann, wobei die entlastenden Einschnitte eine begrenzte Formveränderung am Radialarm gestatten und das Reduzieren der Klebkraft einer Klebverbindung in diesem Bereich den beschriebenen Vorgang begünstigt.

Nach einem weiteren Merkmal der Erfindung sind im Radialarm wenigstens zwei Einschnitte vorgesehen, von denen jeder von einer Seitenkante ausgeht und die zueinander etwa parallel verlaufen, vorteilhafterweise im rechten Winkel zu den Seitenkanten.

Die optimale Wirkung erzeugen die Entlastungseinschnitte dann, wenn ihre Länge größer ist als die halbe Radialarmbreite, beispielsweise etwa zwei Drittel dieser beträgt.

Auch ist es als erfinderisch anzusehen, daß der Radialarm im Bereich der Einschnitte mit dem Filterpapier entweder gar nicht durch den Kaschiervorgang verbunden ist oder nur in einem schmalen Streifen; auch letztere Ausführung reicht aus, die Bewegung des Radialarmes ungehindert geschehen zu lassen.

Der nach den beschriebenen Maßgaben ausgebildete Pfannenfilter ist — wie praktische Versuche zeigen — von hoher und gewünschter Formstabilität.

Nach einem weiteren Merkmal der Erfindung sind die Radialarme und/oder der Tragring durch sogenannte Quetschschweißungen mit dem Filterpapier verbunden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 die Draufsicht auf eine Abdeckung für eine Bratpfanne mit einer diese überspannenden Filterscheibe,

Fig. 2 den vergrößerten teilweisen Radialschnitt durch Fig. 1 nach deren Linie II-II,

Fig. 3 ein vergrößertes Detail aus Fig. 1 in schräger Drauf- und Untersicht, geschnitten an den Linien III-III und IV—IV in Fig. 1.

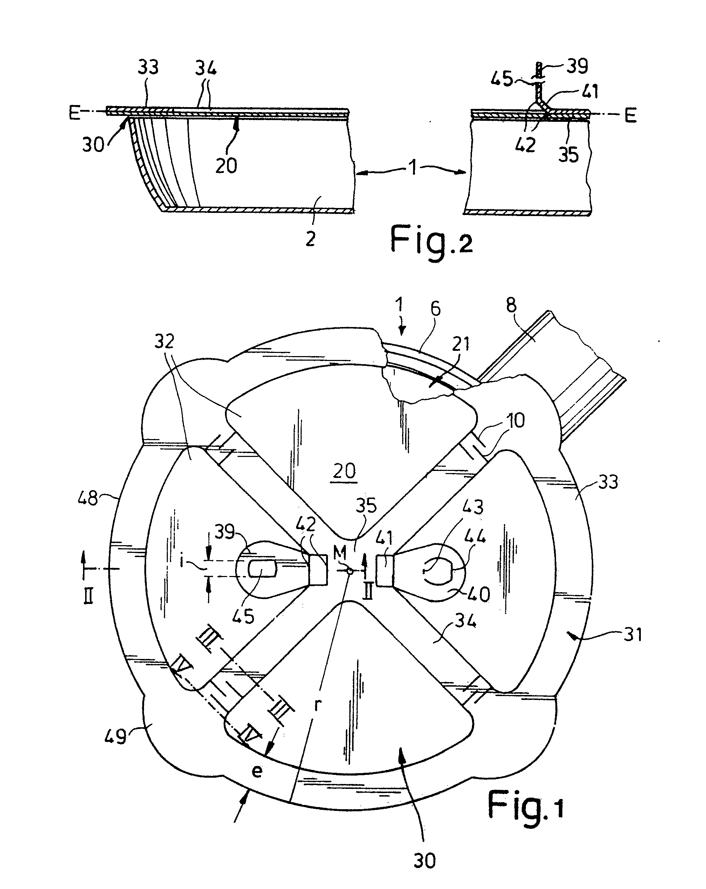

Dem Rand 6 einer mit einem Stiel 8 versehenen Bratpfanne 1 liegt gemäß Fig. 1 eine scheibenartige Abdeckung 30 eines Radius r von beispielsweise 180 mm mit einer Trägerscheibe 31 aus Karton auf, aus welcher vier Sektorfelder 32 herausgestanzt sind; die verbleibenden Teile der Trägerscheibe 31 ergeben einen Rand- oder Tragring 33 der Breite e von 20 mm sowie damit einstückige speichenartige Radialarme 34, die im Scheibenmittelpunkt M in ein Zentralfeld 35 der Trägerscheibe 31 übergehen.

In zwei einander gegenüberliegenden Sektorfeldern 32 ist jeweils eine zungenförmige Lasche 39 bzw. 40 verblieben, von denen jede — ebenfalls beim Stanzvorgang aus der Trägerscheibe 31 geschnitten — mit einem schmalen Streifen 41 an jenes Zentralfeld 35 angeschlossen ist; der Streifen 41 wird beidseits durch Knicklinien 42 begrenzt und kann aus der Scheibenebene E herausgebogen werden, wie Fig. 2 verdeutlicht.

Die eine Lasche 39 ist mit einer Ausnehmung 45 versehen, in die eine — um eine Knicklinie 43 klappbare — Zunge 44 der anderen Lasche 40 in abgeknickter Stellung der Laschen 39, 40 gemäß Fig. 2 einschiebbar ist; da die Breite der Zunge 44 größer ist als die Weite i der Ausnehmung 45, sind beide Laschen 39, 40 in der beschriebenen Lage fest verbunden und bilden so eine Griffschlaufe. Zu deren Ergänzung oder statt ihrer stehen im beschriebenen Ausführungsbeispiel von der Außenkante 48 des Tragrings 33 Greifausformungen 49 ab.

Unterhalb der Trägerscheibe 31 bzw. des Tragrings 33 und seiner Radialarme 34 ist auf diese ein Filterblatt 20 aus Filtercellulose gespannt aufkaschiert oder durch sogenannte Quetschschweißungen festgelegt; das Filterblatt 20 untergreift die Sektorfelder 32 und bildet in diesen eine Filterschicht.

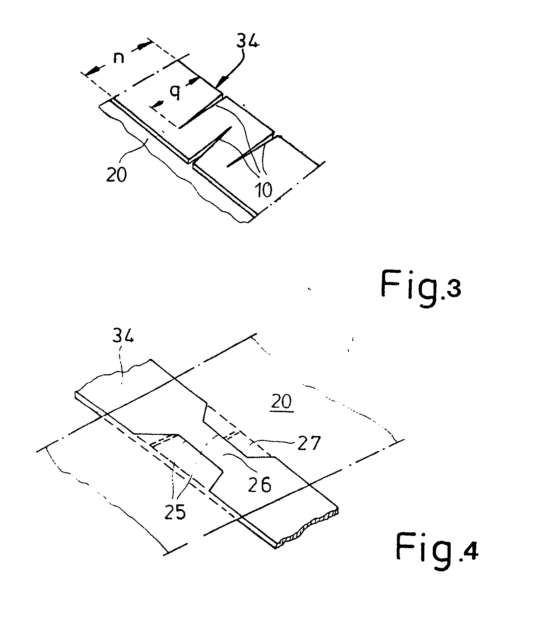

Die Radialarme 34 sind mit Einschnitten 10 versehen, die insbesondere in der Draufsicht gemäß Fig. 3 deutlich werden und deren Länge q etwas kürzer ist als die Breite n des Radialarmes 34. Die Untersicht unter Fig. 3 zeigt in Fig. 4, daß die Verklebung zwischen Radialarm 34 und Filterblatt 20 an dieser Stelle nur sehr gering ist; die Linien 25 lassen einen engeren Klebbereich 26 entstehen, außerhalb dessen das Filterblatt 20 — in den Zonen 27 — unverklebt bleibt.

## Patentansprüche

1. Scheibenartige Abdeckung (30) für Bratpfannen (1) od. dgl. Gefäße, welche eine dampfdurchlässige Filterfläche (20) aus einem faserigen Filterelement, insbesondere aus Filterpapier aufweist, die mit einem mit speichenartigen Radialarmen (34) aus einer Werkstoffscheibe von Karton od. dgl. herausgeschnittenen Tragring (33) verklebt ist, dadurch gekennzeichnet, daß die Radialarme (34) einer Breite (n) durch wenigstens einen von einer ihrer Kanten ausgehenden Einschnitt (10) querschnittsgeschwächt sind sowie die Verbindung zwischen Radialarm (34) und Filterfläche (20) im querschnittsgeschwächten Bereich vermindert ist.

2. Abdeckung nach Anspruch 1, dadurch gekennzeichnet, daß im Radialarm (34) wenigstens zwei Einschnitte (10) vorgesehen sind, die zueinander etwa parallel verlaufen und von denen jeder von einer anderen Seitenkante des Radialarms (34) ausgeht.

3. Abdeckung nach Anspruch 1 oder 2, dadurch gekennzeichnet, daß die Einschnitte (10) etwa rechtwinklig zu den Seitenkanten des Radialarmes (34) gerichtet sind.

4. Abdeckung nach einem der Ansprüche 1 bis 3, dadurch gekennzeichnet, daß die Länge (q) der Einschnitte (10) größer ist als die halbe Radialarmbreite (n) des Radialarms (34).

5. Abdeckung nach einem der Ansprüche 1 bis 4, dadurch gekennzeichnet, daß die Einschnitte (10) am Übergang des Radialarms (34) in den Tragring (33) vorgesehen sind.

6. Abdeckung nach wenigstens einem der Ansprüche 1 bis 5, dadurch gekennzeichnet, daß der Radialarm (34) im Bereich der Einschnitte (10) mit dem Filterpapier (20) od. dgl. partiell unverbunden ist.

7. Abdeckung nach Anspruch 1 oder 6, dadurch gekennzeichnet, daß im Bereich der Einschnitte (10) das Filterpapier (20) od. dgl. mit dem Radialarm (34) über einen Teil von dessen Breite (n), beispielsweise durch eine sog. Quetschschweißung, verbunden ist.

## Claims

1. Disk-shaped covering (30) for frying pans (1) or similar containers provided with a vapour permeable filter surface (20) consisting of a fibrous filter element, especially of filtering paper, being conglutinated with a supporting ring (33) containing spoke-like radial arms (34) cut out of a disk of material of cardboard or the like, characterized in that the radial arms (34) of a breadth (n) are reduced in cross-section due to at least one incision (10) extending from one of its edges, and in that the junction between the radial arm (34) and the filtering surface (20) is diminished in the zone reduced in cross-section.

2. Covering according to claim 1, characterized in that at least two incisions (10) are provided in the radial arm (34) which run approximately parallel to each other and each of which extends from a different lateral edge of the radial arm (34).

3. Covering according to claim 1 or 2, characterized in that the incisions (10) are placed approximately rectangularly in respect of the lateral edges of the radial arm (34).

4. Covering according to one of the claims 1 to 3, characterized in that the length (q) of the incisions (10) is greater than half the breadth (n) of the radial arm (34).

5. Covering according to one of the claims 1 to 4, characterized in that the incisions (10) are provided at the transition of the radial arm (34) into the supporting ring (33).

6. Covering according to at least one of the claims 1 to 5, characterized in that the radial arm (34) is partially not linked with the filtering paper (20) or the like of the incisions (10).

7. Covering according to claim 1 or 6, characterized in that the filtering paper (20) or the like is linked with the radial arm (34) in the zone of the incisions (10) over part of the radial arm's breadth (n) by means of a so-called mash welding, for instance.

## Revendications

1. Recouvrement en forme de disque (30) pour poêles à frire (1) ou des récipients analogues pourvu d'une surface filtrante (20) perméable à vapeur d'un élément filtrant fibreux, particulièrement de papier filtre, étant collé avec un anneau porteur (33) comportant des bras radiaux coupé dans un disque à usiner de carton ou d'une matière analogue, caractérisé en ce que les bras radiaux (34) d'une largeur (n) sont réduits de section à cause d'au moins une incision (10) partant d'une de leurs arêtes et en ce que la jonction entre bras radial (34) et surface filtrante (20) est diminuée dans la zone réduite de section.

2. Recouvrement selon la revendication 1 caractérisé en ce que dans le bras radial (34) sont prévues au moins deux incisions (10) allant à peu près parallèle l'une par rapport à l'autre et dont chacune part d'une autre arête latérale du bras radial (34).

3. Recouvrement selon la revendication 1 ou 2, caractérisé en ce que les incisions (10) sont placées à peu près rectangulaires par rapport aux arêtes latérales du bras radial (34).

4. Recouvrement selon une des revendications 1 à 3, caractérisé en ce que la longueur (q) des incisions (10) est plus elevée que la moitié de la largeur (n) du bras radial (34).

5. Recouvrement selon une des revendications 1 à 4, caractérisé en ce que les incisions (10) sont prévues au passage du bras radial (34) à l'anneau porteur (33).

6. Recouvrement selon au moins une des revendications 1 à 5, caractérisé en ce que le bras radial (34) est partiellement non lié avec le papier filtre (20) ou une chose semblable dans la zone des incisions (10).

7. Recouvrement selon la revendication 1 ou 6, caractérisé en ce que le papier filtre (20) ou une chose semblable est lié dans la zone des incisions (10) avec le bras radial (34) sur une partie de la largeur (n) de celui-là, par exemple par ce qu'on appelle soudage par écrasement.

Fig.2

Fig.1

Fig.3

Fig.4